(19)

Europäisches
Patentamt
European
Patent Office
Office européen
des brevets

(11)  **EP 1 740 869 B1**

(12)  **EUROPEAN PATENT SPECIFICATION**

(45) Date of publication and mention
of the grant of the patent:
**07.11.2012  Bulletin 2012/45**

(51) Int Cl.:
***F16L 9/12*** *(2006.01)*   ***F16L 11/08*** *(2006.01)*

(21) Application number: **05737940.6**

(86) International application number:
**PCT/EP2005/051834**

(22) Date of filing: **25.04.2005**

(87) International publication number:
**WO 2005/103545 (03.11.2005 Gazette 2005/44)**

(54) **A TUBE REINFORCED WITH A POLYMER AND STEEL CORD STRIP**

MIT EINEM POLYMER UND EINEM STAHLKORDSTREIFEN VERSTÄRKTES ROHR

TUBE RENFORCE D'UNE BANDE DE CABLE METALLIQUE ET POLYMERE

(84) Designated Contracting States:
**AT BE BG CH CY CZ DE DK EE ES FI FR GB GR
HU IE IS IT LI LT LU MC NL PL PT RO SE SI SK TR**

(30) Priority:  **26.04.2004  EP 04101731**

(43) Date of publication of application:
**10.01.2007  Bulletin 2007/02**

(73) Proprietor: **NV Bekaert SA
8550 Zwevegem (BE)**

(72) Inventor: **LOKERE, Erwin
B-8500 Kortrijik (BE)**

(56) References cited:
**WO-A-99/66246      WO-A-02/090812
US-A- 4 657 049      US-A1- 2002 182 961**

**Description**

**Field of the invention.**

The invention relates to strips reinforced with steel cords that are used for the reinforcement of pipes or tubes, and to tubes reinforced with such strips.

**Background of the invention.**

Pipes or tubes made from high-density polyethylene (HDPE) are becoming more and more common and are replacing traditional steel tubing for water supply and gas distribution in both domestic and industrial applications. Other polymers like fluoropolymers or polyamids adapted for the use in special applications where temperature, sourness, gas permeability or other fluid properties are important can equally be used. Although these polymers have excellent physico-chemical properties with respect to the fluid a being transported, in many cases they lack intrinsic mechanical strength in order to be useful when the pressure of the transported fluid is raised.

To this end plastic pipes have been reinforced with spirally wound strips containing a reinforcing material in their longitudinal direction. These strips are helicoidally wound around the tube at an angle of between 50 to 60° to the axis of the tube. Lower than 50° angles are used in case a longitudinal reinforcement of the tube is needed. Higher than 60° angles are used in case a stronger radial reinforcement is needed. While in the past the preferred reinforcing material for such strips was an aramid type of material, the use of steel cords or wires has been suggested (see e.g. WO 02/090812).

The use of steel cord or wire in strips for the reinforcement of tubes presents some special challenges that have to be overcome. One particular problem that is the subject of the present invention is the lack of anchoring between the steel cord and the polymer matrix. Such anchoring is particularly important in the region of a pipe-to-pipe connection or pipe-to-end-fitting because there the steel reinforcement is interrupted. At these ends all tensional forces in the strip of the first pipe end have to be brought over to the second pipe end (or end-fitting as the case may be) through the intermediate polymer matrix such that the connection does not break due to the pressure on the fluid.

The transfer of force can for example be achieved by welding a sleeve over both tube ends in the case of a tube-to-tube connection. This sleeve must be limited in length because a connection has to be made in the field with portable (hence short) equipment, sometimes under harsh conditions (with limited shelter) and within a reasonable time period (to limit its cost).

Steel cord reinforced strips are known the art. For example US 2002/0182961 A1 discloses fabrics comprising strips reinforced with steel cord. Different combinations of steel cord and matrix materials are described. However, no criterion is given on how such a combination must be selected to obtain a good anchoring.

For clarity: with 'anchoring' something different than 'adhesion' is meant. Adhesion systems provide transfer of forces between two materials by mediation of a chemically reacting interface layer. Although adhesion systems are possible between steel and various polymers they require the presence of specials coating - e.g. brass in case the polymer matrix is rubber - that add to the total cost of the system. When thermoplastic polymers are used the adhesion system can even become more complicated - due to the saturated nature of the molecules - requiring two or more intermediate layers adding more to the overall cost. This cost is even more exuberant when considering that the adhesion is mainly needed in the connection region: outside these regions the cord-to-polymer adhesion is less important. Within the context of this application only mechanical transfer of forces between cord and polymer is thus considered and this transfer of forces is called 'anchoring'.

**Summary of the invention.**

matrix. It is a further object of this invention to provide such an anchoring without the need of any adhesion system.

Cords used for the reinforcement of pipes, tubes or hoses that have to withstand a design burst pressure $P_{burst}$ in general must obey a simple relation when wound at the neutral angle of $\arctan\sqrt{2}$:

$$n \cdot (F_b/d_{cord}) \cdot \varphi_{strip} \geq P_{burst} \cdot D \cdot (3/4)$$

where the symbols have the following meaning

n          is the number of reinforcing layers that for economical reasons must kept as low as possible. A balanced number of clockwise and counter clockwise wound layers is preferred in order to maintain torsion balance on the overall tube.

$F_b$      is the ultimate force a cord can sustain under tension i.e. the breaking load of the cord.

$d_{cord}$      is the diameter of an imaginary cylinder enveloping the cord over at least ten lay lengths i.e. the optical diameter of the cord.

$\varphi_{strip}$      is the sum of the diameters of the cords making up a strip divided by the transversal width of the strip. One will always seek to have this ratio as close as possible to one.

D      is the diameter of the reinforcement on the tube. In case more than one reinforcing layer is present, the average of the diameters of each reinforcing layer is a first approximation.

In the design of the cord, one will always seek to maximise the ratio $F_b/d_{cord}$ i.e. transversal breaking load per unit diameter as this can reduce the number of layers n. $F_b/d_{cord}$ can also be written as:

$$F_b/d_{cord} = \sigma_{in} \cdot \psi_c \cdot \varphi_c \cdot d_{cord} \cdot (\pi/4)$$

wherein:

$\sigma_{in}$      is the tensile strength of the wires used to make the cord i.e. the breaking load of the wire divided by the perpendicular cross sectional area (conventionally expressed in $N/mm^2$).

$\psi_c$      is an efficiency loss commonly called 'cabling loss': all of the strength of the wires does not add up to the strength of the steel cord. The factor can vary between 0.60 and 1.00 depending on the construction of the steel cord.

$\varphi_c$      is the metallic fill factor i.e. the ratio of the metallic area of the wires in the cord to the area of the circumscribed circle of the cord. As metallic area $A_{metal}$, the sum of the perpendicular cross sectional areas of filaments is taken (in line with DIN 3051, part 3). $d_{cord}$ is used to calculate the area of the circumscribed circle of the cord.

$\pi/4$      is a geometry factor finding its origin in the fact that the steel cords are considered to be round.

Within the technical field of rubber hoses, these requirements have lead to the use of cords that are thick, have a high metallic fill factor and a low cabling loss. Cords that are typically used to this end have a diameter of between 2.4 and 4.5 mm, are of the Warrington type, have a metallic fill factor of at least 75%. There is no need for anchoring here, because there is enough chemical adhesion between the zinc or brass coated cord and the rubber.

The inventors have found that these conventionally known cords are not fit for use in a pipe or tube reinforced with strips. For example the thickness of the cord cannot be increased at will when using a strip to reinforce a tube because:

- the length that can be wound on a strip roll is determined by the thickness of the strip that is determined on its turn by the diameter of the steel cord.
- the amount of matrix material needed increases with the diameter.

Typically one strives to keep the diameter of the cord below 2.4 mm, although it is more preferred to keep it below 2.0 mm. Most preferred is to keep it between 1.0 to 1.65 mm.

Moreover, the inventors identified a class of steel cords that do solve the anchoring problem. The characterising features to which such a problem solving strip with steel cord must obey are disclosed in the independent claim 1 and the claims 2 to 7 depending thereof.

In the connection of one pipe to the next (or to an end-fitting as the case may be) all forces must be transmitted over the anchoring between steel cord and polymer. Such a connection comprises a sleeve that is slid over the end of the first tube to be connected and thereafter retracted to cover the end of the second tube, so that the sleeve is shared between both ends of the tube. Thereafter the sleeve is welded to the polymer of both tube ends. The anchoring should be sufficient that the connection or the mounting of the end-fitting can be done over a sufficiently small distance.

As mechanical anchoring is an interplay between the surface structure of the steel cord (the amount of openness, the angle between filaments and cord direction, the smoothness of the outer surface) and polymer matrix (its hardness, its ability to flow into the cord) the degree of anchoring or anchoring strength is best quantified as the pull-out force per unit length $f_a$ that is needed to pull a single cord out of a strip in the longitudinal direction of the strip (expressed in N/mm). The inventors have found that the transversal breaking load per unit diameter ($F_b/d_{cord}$) must not be larger than 300 times the pull-out force per unit length $f_a$ in order to allow for a conveniently small connector length (claim 1). Better is when this value is not larger than 150 times $f_a$ (claim 2). As such pull-out forces can also be reached by using chemical adhesion means between steel cord and polymer, the pull-out force is expressly limited not to be too high. Indeed, 30 times the pull-out force per unit length $f_a$ must be smaller than $F_b/d_{cord}$.

This criterion can also be expressed in terms of a 'critical length $L_c$'. The critical length is that embedment length where the total pull out force is equal to the breaking load of the cord. The requirements can then be reformulated in that the critical length $L_c$ must be smaller than $300 \cdot d_{cord}$, respectively must be smaller than $150 \cdot d_{cord}$. Likewise, the critical length must not be smaller than $30 \cdot d_{cord}$ i.e. a number that is easily achievable with chemical mediated adhesion. The critical length is proportional to the connector length.

$f_a$ is determined by embedding the steel cord in a block of polymer matrix material over a length of 25.4 mm. After proper cooling, the steel cord is longitudinally pulled out and the maximum force is registered. $f_a$ is then equal to the force divided by the embedment length and is expressed in N/mm. The test will be described in more detail in the 'Description of the preferred embodiments of the invention' section.

By preference the strips according the invention must be reinforced with cords that are sufficiently open i.e. within their perimeter enough polymer must be able to ingress in order to mechanically lock the polymer into the cord. The ratio of the metallic area $A_{metal}$ to the area of the circumscribed circle ($\pi d_{cord}^2/4$) - or $\varphi_c$ as defined above - must be less than 0.70 or 70% (claim 3). This is a measure for the degree of 'openness' of the cord. The lower the number, the more polymer can ingress into the cord, and if more polymer can enter the cord it will better anchor the cord.

As will be clear from the above a lower metallic fill factor must be compensated by a higher initial strength of the wires. Preferably the tensile strength as expressed over the total circumscribed area $F_b/(\pi d_{cord}^2/4)$ must be larger than 1500 N/mm$^2$. Even more preferred is that this tensile strength is above 1700 N/mm$^2$. Most preferred is that this value is above 2000 N/mm$^2$.

A subclass of cords that reach a sufficient mechanical anchoring in combination with the required strength are characterised in that each and every of the filaments constituting the cord comes into contact with the polymer matrix at regular or irregular intervals (claim 4). In this way all filaments carry an equal anchoring load enhancing the balanced loading of the filaments.

The anchoring capacity can be further improved by giving the filaments permanent bends in directions perpendicular to the initial axis of the filament resulting in a wavy or helical shape prior to twisting them together (claim 5). This increases locally the angle between the filaments and cord axis, leading to an improved anchoring of the cord in the polymer.

The mechanical anchoring is also determined by the stiffness of the polymer matrix. A soft material will more easily let go the steel strand embedded in it compared with a hard material. Thermoplastic polymers are the material of preference (claim 6). More preferred are thermoplastic polymers with a shore D hardness between 45 and 75 Most preferred are polymers with a shore D value between 50 and 65. Shore D is measured according the ISO 868 (or the equivalent ASTM D2240-03) standard and is well known to the person skilled in the art in the field of polymer physics.

There are a number of thermoplastic polymers that either in pure form or blended with co-polymers obtain the desired mechanical hardness. The most prominent one's are high density polyethylene (HDPE) (claim 10) and polypropylene (PP). Other polymers like polyvinylchloride (PVC), polyamide (PA11) or cross-linked polyethylene (PEX) or fluoropolymers like ethyl-tetra-fluoro-ethylene (ETFE), fluorinated ethylene propylene (FE), hexa-fluoro-propylene (HFP), poly (vinylidene fluoride) (PVDF), poly (phenylene sulfide) (PPS), poly (etheretherketone) (PEEK), or perfluoroalkoxy (PFA) could be considered as well.

According a second aspect of the invention, a pipe is claimed (claim 8). This pipe comprises a centre tube and at least one layer of reinforcing material in the form of a strip. The strip is helically wound around said centre tube. The strip comprises a polymer matrix and a plurality of steel cords, the steel cords being arranged parallel in the strip. The steel cords have a breaking load $F_b$ and a diameter $d_{cord}$, hence they have a transversal breaking strength per unit diameter of $F_b/d_{cord}$ expressed in N/mm. The pipe characterises itself from the state of the art in that the cords are mechanically anchored in the polymer matrix of the strip as characterised in claim 1 i.e. that the steel cords are mechanically anchored in the matrix with a longitudinal pull-out force per unit length of $f_a$ in N/mm, such that the transversal breaking load per unit diameter $F_b/d_{cord}$ is smaller than 300 times $f_a$ or in formula:

$$(F_b/d_{cord}) < 300 \cdot f_a$$

A higher degree of anchoring of the steel cord in the strip of the tube is claimed in claim 9 namely that

$$(F_b/d_{cord}) < 150 \cdot f_a$$

According a third aspect of the invention, a method to shorten the covered length of a pipe-to-pipe or a pipe-to-end-fitting sleeve connection is claimed (claim 10). With covered length is meant that length at the end of the pipe that is covered with the connector sleeve. As above the pipe comprises a thermoplastic center tube and at least one layer of reinforcing material in the form of strip, where the strip comprises a polymer matrix and a plurality of steel cords that are arranged parallel in the strip. The connection is different from the existing art in that the steel cords are purely mechanically anchored in the polymer matrix and that the covered length per pipe end is more than 30 times and less than 300 times the diameter of the steel cord.

**Brief description of the drawings.**

The invention will now be described into more detail with reference to the accompanying drawings wherein

FIGURE 1a    depicts the mould to test the anchoring property of the cords in the polymer matrix.
FIGURE 1b    shows how the steel cord is pulled out of a polymer block.
FIGURE 2    illustrates how the anchoring of a steel cord in the strip itself must be determined.
FIGURE 3a    is a schematic presentation of cord Nr. 2.
FIGURE 3b    is a schematic representation of cord Nr. 3.
FIGURE 3c    is a schematic representation of cord Nr. 1.
FIGURE 3d    is a schematic representation of cord Nr. 7.

**Description of the preferred embodiments of the invention.**

Table 1. on page 16 enumerates a number of cords that have been investigated for their suitability to be used in a strip for the reinforcement of a pipe or tube. The columns (A) through (K) contain the following:

(A) A numeral in order to identify the cord
(B) A short cord type description. The two letter codes behind the formula categorises the breaking strength of the filaments used for the construction:

NT    Normal Tensile
HT    High Tensile
ST    Super Tensile

Note that within each strength class, the tensile strength diminishes with increasing filament diameter.
(C) Whether the filament was straight (Str.) or preformed (Pref.) perpendicular to its initial axis before assembling the filaments together.
(D) The type of coating applied. Although the coating does not influence the anchoring, the coating type has been included for completeness. With 'HDG' a 'Hot Dip Galvanising' coating is meant, 'EG' refers to an Electrolytic Galvanised coating and 'Brass' is a brass coating containing about 63.5 wt%Cu and the remainder being zinc.
(E) The diameter of the cord $d_{cord}$. The diameter has been determined by means of an optical profiloscope in which the silhouette of a straightened part of the cord - covering more than ten lay lenghts of the cord - is precisely matched between two parallel lines. The distance between the lines is the optical diameter.
(F) Is the breaking load of the cord $F_b$.
(G) Is the fill factor of the cord $\varphi_c$ as defined before.
(H) Is the average tensile strength of the cord calculated over its total area (not only metallic area). In formula it is equal to $F_b/(\pi \cdot d_{cord}^2/4)$
(I) The strength per unit diameter of the cord $F_b/d_{cord}$.
(J) The anchoring force per unit length of cord $f_a$.
(K) The ratio of column 'I' divided by column 'J'

The cord built-up (column 'B') is explained in what follows:

Nr. 1.    The '7x3x0.15' is multi-strand construction consisting of 6 strands twisted around a central strand. All strands consist of 3 filaments having a filament diameter of 0.15 mm twisted together with a lay opposite to the lay of the strands in the cable.
Nr. 2.    The '3x0.24+9x0.225' construction consists of a 3 filaments each 0.24 mm thick, twisted together with a certain lay direction and length. In a subsequent operation 9 filaments are twisted around the core with a lay direction opposite to the core lay direction and with a lay length different from the core lay length.
Nr. 3.    The '0.34|18x0.30' is a so-called parallel lay construction, more specifically a compact cord construction. It is made in one step in which a single core filament of 0.34 mm diameter is twisted together with 18 filaments, 0.30 mm thick wherein the wire centres are arranged on 3 circles concentric with the central filament, each of the 3 circles having 6 wires centres on them.

Nr. 4. The '4+10x0.38' construction compares very will with the Nr. 2 construction. The core is first made with 4 filaments with a diameter of 0.38 mm followed by the sheathing with 10, 0.38 filaments with a lay opposite to the core lay direction.

Nr. 5. The '(4)+(6)x0.38' consists of two strands that are twisted around each other with a certain cord lay length. Both strands are totally different in nature. The strand containing 4 filaments has a very long lay length, the strand containing 6 filaments has a lay direction and a lay length close or equal to the lay direction and length of the cord. The filaments in the strand of 6 have been crimped in one direction prior to twisting. The 4 filaments in the strand of 4 have received a crimp in two substantially perpendicular directions.

Nr. 6. Cord Nr. 6 is identical to cord Nr. 5 in that it only differs in the diameter of the filament used: 0.30 mm in stead of 0.38.

Nr. 7. Cord Nr. 7 is identical to cord Nr. 6 but there only the 6 filaments of the first strand have received a crimp in one direction, while the 4 other filaments have not received any bending treatment.

Nr. 8. Cord Nr. 8 is identical to cord Nr. 7, but there none of the filaments has been bent prior to the stranding.

Nr. 9. The '(4)+(3)x0.415' construction is built up out of two strands that are twisted around each other with a certain cord lay length. Both strands are totally different in nature. The strand containing 4 filaments has a very long lay length, the strand containing 3 filaments has a lay direction and a lay length close or equal to the lay direction and length of the cord.

Only a few of the constructions above are fitted to solve the anchoring problem of tube reinforcement strips as will be demonstrated below.

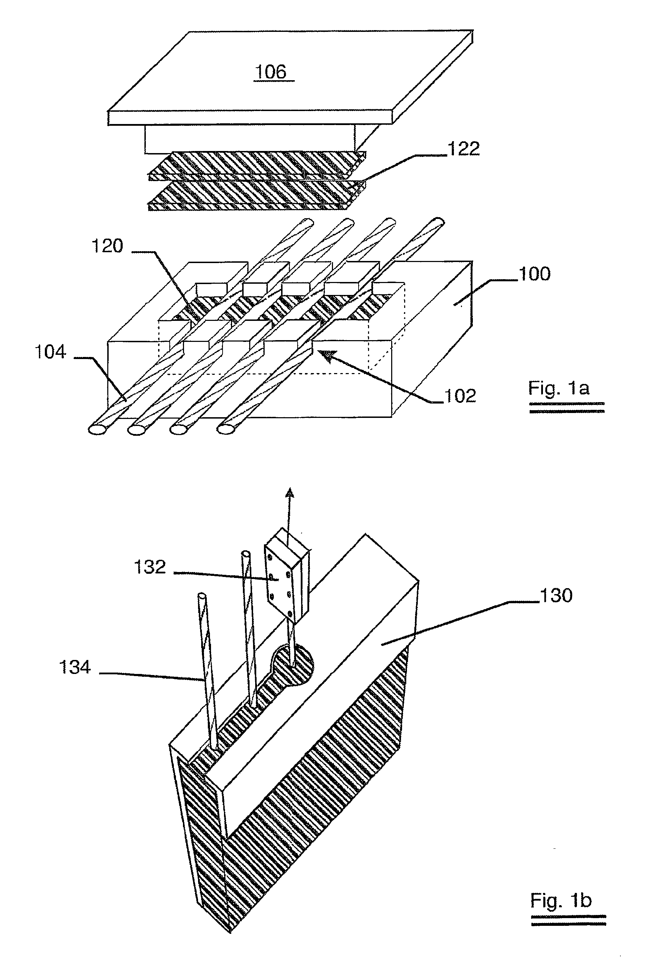

To determine the anchoring strength, the pull out force per unit length $f_a$ is determined on steel cords embedded in blocks of polymer with a height of 12.5 mm, a width of 24.5 mm and a length of approximately 200 mm. The preparation of these is clarified in FIGURE 1 a and proceeds as follows:

- First thin (ab. 1 mm) 24.5 mm × 200 mm pre-cut strips 120 of the polymer under test are laid into a cold mould 100 until a thickness of 6 to 7 mm is reached.
- The mould has 16 notches 102 where the steel cords under test 104 are laid in. The cords are laid parallel to one another and have a contact length of 24.5 mm with the polymer. The cords are positioned in the middle plane of the block i.e. at 6.25 mm from the sides.
- More layers of pre-cut strips of polymer 122 are laid on top of the cords until a total thickness of 13 to 14 mm is reached.
- The mould is closed with the stamp 106 and slid into a hot press at a temperature of 180°C for 30 minutes. After opening the mould, the sample is clamped in a cold press to stabilise it shape during cooling. Expelled material at the notches is removed.

The pull-out testing is performed after a resting time of 16 hours in the following way (depicted in FIGURE 1b):

- the cords 134 are vertically positioned in the middle of a 12.7 mm circle clamp 130 and pulled out by a tensile tester clamp 132 in their longitudinal direction at a speed of ab. 100 mm/min.
- The average of four samples is taken as a single adhesion result. The test is adapted from the ASTMD 2229-85 'Standard Test Method for Rubber Property - Adhesion to Steel Cord'.

The anchoring results of table 1, column 'J' have been obtained with 'Eltex® TUB 172' which is a high-density polyethylene copolymer designed for the extrusion of gas pressure pipes, produced by Solvay Polyolefins Europe. The measured Shore D hardness of the blocks was between 54 and 55.5.

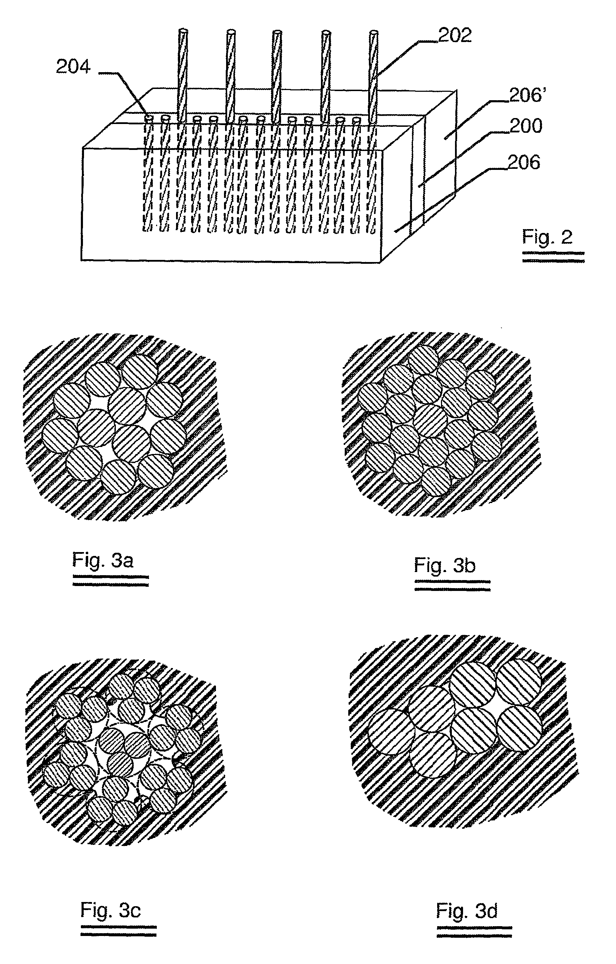

The test method can easily be extended - as depicted in FIGURE 2 - to the anchoring of the cord in the strip itself by cutting a piece of strip 200 about (25.4 + 50) mm long, freeing for example every third cord 202 , while cutting the others 204. The strip is then heat welded between two preformed polymer blocks 206, 206' of about 6mmx24.5mmx200mm. The testing is performed in the same manner as for the block.

The ratio of $(F_b/d_{cord})/f_a$ in this polymer matrix is calculated in column K. Cords 1, 5, 6, 7, 8, 9 in this polymer matrix fulfil claim 1. When interpreted in terms of the critical length $L_c$ this would mean that a length of $300 \times d_{cord}$ is sufficient to anchor the cord up to its breaking load. Hence these types of cords are best suited to obtain a short connection between pipes. For cords Nr. 1, 5, 6, 7, 8 the critical length is even shorter than $150 \times d_{cord}$ (claim 2).Cords 2, 3 and 4 have a $(F_b/d_{cord})/f_a$ ratio that is larger than 300 (i.e. outside the scope of claim 1). Apparently these cords have too much metallic area inside the circumscribed circle and do not allow enough polymer ingress although they yield a very favourable tensile strength (column 'H' in table 1). A subclass of the class of cords defined by claim 1 is thus defined by claim 3 wherein all cords in addition have a metallic fill factor smaller than 0.70.

The cords that distinguish themselves as having a higher anchoring capability also share the characteristic of claim 4. Each and every filament constituting the steel cord for the reinforcement of the strip makes partial and intermittent contact to the matrix. With 'partial' is meant that the contact is at least over a part of the circumference of the filament. With 'intermittent' is meant that the contact does not have to be over the full length of the filament. This is illustrated in FIGURE 3. In FIGURE 3a the construction Nr. 2 is depicted. Only the outer 9 filaments are in permanent but partial contact with the matrix. The 3 center filaments never or extremely rarely contact the matrix even when taking account of the twisting of the cord. So not each and every filament is in contact with the matrix. FIGURE 3b illustrates a similar case where the 1 +6 centre filaments of construction Nr. 3 never come in contact with the matrix.

FIGURE 3c depicts the cord Nr. 1 where all filaments of the outer strands periodically come into partial contact with the matrix. Only the core strand never - or extremely rarely- comes into contact with the matrix. FIGURE 3d depicts the construction Nr. 7. Here the filaments forming the cord are filled-in differently depending on the strand they belong to. When taking into account the helical winding of the strand around each other and the twisting of the wires in the strand with three (3) filaments, it will be clear to the person skilled in the art that in this construction each and every filament periodically and at least partially comes into contact with the matrix. As cords Nr. 5 and 6 are built up along the same lines, they are also characterised by claim 4.

Over and above the cords Nr. 5, 6 and 7 contain filaments that have been deformed prior to cabling. The filaments of the strand with four (4) filaments have been crimped in two directions perpendicular to one another by leading them through two sets of gear pairs. The filaments of the strand with six (6) filaments have been bend in one plane in one direction only prior to twisting into the strand. The final shape of the latter filaments is a polygonal helix i.e. the projection of the filament on a plane perpendicular to its axis is a - not necessarily closed - polygon where for an undeformed filament the projection of the is a circle. Cord 7 is a cord where only the six (6) filaments have been bend in one plane prior to twisting while the remaining group of four (4) filaments has not been deformed. In that respect the series of cords 6, 7 and 8 form a series of cords with decreasing degree of deformation. Cord 6 (all filaments deformed) yields better adhesion results than cord 8 (no deformed filaments). This influences also the critical length that increases with less deforming (see column K). Considering all of the above, it will be clear to the person skilled in the art that the constructions that are best suited to reinforce a strip for pipe reinforcement are of type Nr. 6 to Nr. 9.

Table 1

| A | B | C | D | E | F | G | H | I | J | K |
|---|---|---|---|---|---|---|---|---|---|---|
| Nr | Cord type | Fil. | Coating | $d_{cord}$ (mm) | $F_b$ (N) | $\varphi_c$ | Strength (N/mm$^2$) | $F_b/d_{cord}$ (N/mm) | $f_a$ (N/mm) | $(F_b/ dcord) /f_a$ |
| 1 | 7×3×0.15 NT | Str. | HDG | 0.91 | 975 | 57% | 1499 | 1071 | 12.8 | 83 |
| 2 | 3×0.24+9×0.225 HT | Str. | Brass | 0.95 | 1510 | 70% | 2130 | 1589 | 3.7 | 435 |
| 3 | 0.34\|18×0.30 HT | Str. | EG | 1.53 | 4007 | 74% | 2179 | 2619 | 5.5 | 480 |
| 4 | 4+10×0.38 ST | Str. | Brass | 1.65 | 4791 | 74% | 2241 | 2904 | 8.6 | 337 |
| 5 | (4)+(6)×0.38 HT | Pref. | Brass | 1.64 | 3050 | 54% | 1444 | 1860 | 19.2 | 97 |
| 6 | (4)+(6)×0.30 HT | Pref. | Brass | 1.26 | 2141 | 57% | 1717 | 1699 | 13.2 | 128 |
| 7 | (4)+(6)×0.30 HT | Pref. | HDG | 1.25 | 2159 | 58% | 1759 | 1727 | 12.6 | 138 |
| 8 | (4)+(6)×0.30 HT | Str. | HDG | 1.22 | 2172 | 60% | 1858 | 1780 | 11.9 | 149 |
| 9 | (4)+(3)×0.415 ST | Str. | Brass | 1.36 | 3025 | 65% | 2082 | 2224 | 11.7 | 190 |

**Claims**

1. A pipe or tube reinforcement strip comprising a thermoplastic polymer matrix and a plurality of steel cords comprising steel filaments, said steel cords being arranged parallel in said strip, said steel cords having a breaking load $F_b$ and a diameter $d_{cord}$, said steel cords having a transversal breaking strength per unit diameter of $F_b/d_{cord}$ in N/mm, **characterised in that** said matrix has a shore D hardness between 45 and 75 and each of said steel filaments makes partial and intermittent contact to said matrix when progressing along said filament, so that said steel cords are mechanically anchored in said matrix with a longitudinal pull-out force per unit length of $f_a$ in N/mm, such that the transversal breaking load per unit diameter $F_b/d_{cord}$ is smaller than 300 $f_a$ and $F_b/d_{cord}$ is larger than 30 times $f_a$ or in formula:

$$30 \cdot f_a < (F_b/d_{cord}) < 300 \cdot f_a$$

2. The strip according claim 1 wherein said transversal breaking load per unit diameter $F_b/d_{cord}$ is smaller than 150 times $f_a$ and $F_b/d_{cord}$ is larger than 30 times $f_a$ or in formula:

$$30 \cdot f_a < (F_b/d_{cord}) < 150 \cdot f_a$$

3. The strip according to any one of claims 1 or 2 wherein each of said steel cords has a metallic area $A_{metal}$ and the ratio of the metallic area $A_{metal}$ to the area of the circumscribed circle ($\pi d_{cord}^2/4$) is less than 0.70.

4. The strip according any one of claims 1 to 3 wherein said steel cord comprises filaments that are wavy or helically bent in directions perpendicular to the axis of the filament.

5. The strip according any one of claims 1 to 4 wherein said thermoplastic polymer is polyethylene.

6. Pipe for transporting pressurised media comprising a thermoplastic centre tube and at least one layer of reinforcing material in the form of a strip, said strip being helically wound around said centre tube, said strip comprising a polymer thermoplastic matrix and a plurality of steel cords comprising steel filaments, said steel cords being arranged parallel in said strip, said steel cords having a breaking load $F_b$ and a diameter $d_{cord}$, said steel cords having a transversal breaking strength per unit diameter of $F_b/d_{cord}$ in N/mm,
**characterised in that**
said matrix has a shore D hardness between 45 and 75 and each of said steel filaments makes partial and intermittent contact to said matrix when progressing along said filament, so that said steel cords are mechanically anchored in said matrix with a longitudinal pull-out force per unit length of $f_a$ in N/mm, such that the transversal breaking load per unit diameter $F_b/d_{cord}$) is smaller than 300 times $f_a$ or in formula:

$$(F_b/d_{cord}) < 300 \cdot f_a$$

7. The pipe according claim 6 wherein wherein said transversal breaking load per unit diameter $F_b/d_{cord}$ is smaller than 150 times $f_a$ or in formula:

$$(F_b/d_{cord}) < 150 \cdot f_a$$

8. A method to reduce the covered length of a pipe-to-pipe or a pipe-to-end-fitting sleeve connection of a pipe comprising a thermoplastic centre tube and at least one layer of reinforcing material in the form of strip, said strip comprising a polymer matrix and a plurality of steel cords, said steel cords being arranged parallel in said strip, comprising the steps of:

    - providing a connector sleeve
    - sliding said sleeve over the end of the first tube to be connected
    - thereafter retracting said sleeve over said second tube or said fitting
    - welding said sleeve to said first and second tube or said first tube and said end fitting

**characterised in that**
said steel cords are mechanically anchored in said polymer matrix and the covered length per pipe end is more than 30 times and less than 300 times the diameter of said steel cord.

**Patentansprüche**

1. Rohr- oder Röhrenverstärkungsstreifen, der eine Matrix aus einem thermoplastischen Polymer und eine Vielzahl von Stahlcorden, die Stahlfäden umfassen, umfasst, wobei die Stahlcorde in dem Streifen parallel angeordnet sind, wobei die Stahlcorde eine Reißkraft $F_b$ und einen Durchmesser $d_{cord}$ aufweisen, wobei die Stahlcorde eine Querreißfestigkeit pro Durchmessereinheit von $F_b/d_{cord}$ in N/mm aufweisen,
**dadurch gekennzeichnet, dass**
die Matrix eine Shore-D-Härte zwischen 45 und 75 aufweist und jeder der Stahlfäden entlang des Fadens fortschreitend teilweise und zeitweise die Matrix berührt, sodass die Stahlcorde mit einer Längsausziehkraft pro Längeneinheit von $f_a$ in N/mm mechanisch in der Matrix verankert sind, sodass die Querreißkraft pro Durchmessereinheit $F_b/d_{cord}$ geringer ist als 300 $f_a$ und $F_b/d_{cord}$ größer ist als 30 mal $f_a$ oder als Formel:

$$30 \times f_a < (F_b/d_{Cord}) < 300 \times f_a$$

2. Streifen nach Anspruch 1, wobei die Querreißkraft pro Durchmessereinheit $F_b/d_{cord}$ geringer ist als 150 mal $f_a$ und $F_b/d_{cord}$ größer ist als 30 mal $f_a$ oder als Formel:

$$30 \times f_a < (F_b/d_{Cord}) < 150 \times f_a$$

3. Streifen nach einem der Ansprüche 1 oder 2, wobei jeder der Stahlcorde eine Metallfläche $A_{Metall}$ aufweist und das Verhältnis von der Metallfläche $A_{Metall}$ zur Fläche des umschriebenen Kreises ($\pi d_{Cord}^2/4$) kleiner als 0,70 ist.

4. Streifen nach einem der Ansprüche 1 bis 3, wobei der Stahlcord Fäden umfasst, die wellenförmig oder spiralförmig in Richtungen senkrecht zur Achse des Fadens gebogen sind.

5. Streifen nach einem der Ansprüche 1 bis 4, wobei das thermoplastische Polymer Polyethylen ist.

6. Rohr zum Transportieren von unter Druck stehenden Medien, das eine thermoplastische Mittelröhre und mindestens eine Schicht aus Verstärkungsmaterial in Form eines Streifens umfasst, wobei der Streifen spiralförmig um die Mittelröhre gewickelt ist, wobei der Streifen eine Matrix aus einem thermoplastischen Polymer und eine Vielzahl von Stahlcorden, die Stahlfäden umfassen, umfasst, wobei die Stahlcorde in dem Streifen parallel angeordnet sind, wobei die Stahlcorde eine Reißkraft $F_b$ und einen Durchmesser $d_{cord}$ aufweisen, wobei die Stahlcorde eine Querreißfestigkeit pro Durchmessereinheit von $F_b/d_{Cord}$ in N/mm aufweisen,
**dadurch gekennzeichnet, dass**
die Matrix eine Shore-D-Härte zwischen 45 und 75 aufweist und jeder der Stahlfäden entlang des Fadens fortschreitend teilweise und zeitweise die Matrix berührt, sodass die Stahlcorde mit einer Längsausziehkraft pro Längeneinheit von $f_a$ in N/mm mechanisch in der Matrix verankert sind, sodass die Querreißkraft pro Durchmessereinheit $F_b/d_{cord}$ geringer ist als 300 mal $f_a$ oder als Formel:

$$(F_b/d_{Cord}) < 300 \times f_a$$

7. Rohr nach Anspruch 6, wobei die Querreißkraft pro Durchmessereinheit $F_b/d_{Cord}$ geringer ist als 150 mal $f_a$ oder als Formel:

$$(F_b/d_{Cord}) < 150 \times f_a$$

8. Verfahren zur Verkürzung der überdeckten Länge einer Rohr-Rohr- oder einer Rohr-Endfitting-Muffenverbindung eines Rohrs, das eine thermoplastische Mittelröhre und mindestens eine Schicht aus Verstärkungsmaterial in Form eines Streifens umfasst, wobei der Streifen eine Polymermatrix und eine Vielzahl von Stahlcorden umfasst, wobei die Stahlcorde in dem Streifen parallel angeordnet sind, das folgende Schritte umfasst:

   - Bereitstellen einer Verbindungsmuffe,
   - Schieben der Muffe über das Ende der ersten zu verbindenden Röhre,

- danach Zurückziehen der Muffe über die zweite Röhre oder den Fitting
- Anschweißen der Muffe an die erste und zweite Röhre oder die erste Röhre und den Endfitting

**dadurch gekennzeichnet, dass**

die Stahlcorde mechanisch in der Polymermatrix verankert werden und die überdeckte Länge pro Rohrende mehr als das 30-fache und weniger als das 300-fache des Durchmessers des Stahlcords beträgt.

**Revendications**

1. Bande de renforcement de tube ou de tuyau, comprenant une matrice polymère thermoplastique et une pluralité de câbles d'acier comprenant des filaments d'acier, lesdits câbles d'acier étant aménagés parallèlement dans ladite bande, lesdits câbles d'acier ayant une charge à la rupture $F_b$ et un diamètre câble, lesdits câbles d'acier ayant une résistance à la rupture transversale par unité de diamètre de $F_b/d_{câble}$ en N/mm,
   **caractérisée en ce que** :

   ladite matrice a une dureté shore D entre 45 et 75 et chacun desdits filaments d'acier assure un contact partiel et intermittent avec ladite matrice lors de la progression le long dudit filament, si bien que lesdits câbles d'acier sont mécaniquement ancrés dans ladite matrice avec une force d'extraction longitudinale par unité de longueur de $f_a$ en N/mm de sorte que la charge à la rupture transversale par unité de diamètre $F_b/d_{câble}$ soit plus petite que 300 $f_a$ et que le rapport $F_b/d_{câble}$ soit plus grand que 30 fois $f_a$ ou comme montré dans la formule suivante :

$$30.f_a < (F_b/d_{câble} < 300.f_a$$

2. Bande selon la revendication 1, dans laquelle ladite charge à la rupture transversale par unité de diamètre $F_b/d_{câble}$ est plus petite que 150 fois $f_a$ et $F_b/d_{câble}$ est plus grand que 30 fois $f_a$ ou comme montré dans la formule suivante :

$$30.f_a < (F_b/d_{câble} < 150.f_a$$

3. Bande selon l'une quelconque des revendications 1 ou 2, dans laquelle chacun desdits câbles d'acier a une surface métallique $A_{métal}$ et le rapport de la surface métallique $A_{métal}$ à la surface du cercle circonscrit ($\pi$ $d_{câble}^2/4$) est inférieur à 0,70.

4. Bande selon l'une quelconque des revendications 1 à 3, dans laquelle ledit câble d'acier comprend des filaments qui sont ondulés ou recourbés en hélice dans des directions perpendiculaires à l'axe du filament.

5. Bande selon l'une quelconque des revendications 1 à 4, dans laquelle ledit polymère thermoplastique est le polyéthylène.

6. Tuyau pour le transport de milieux sous pression, comprenant un tube central thermoplastique et au moins une couche de matériau de renfort sous la forme d'une bande, ladite bande étant enroulée en hélice autour dudit tube central, ladite bande comprenant une matrice thermoplastique polymère et une pluralité de câbles d'acier comprenant des filaments d'acier, lesdits câbles d'acier étant aménagées parallèlement dans ladite bande, lesdits câbles d'acier ayant une charge de rupture $F_b$ et un diamètre $d_{câble}$, lesdits câbles d'acier ayant une résistance à la rupture transversale par unité de diamètre de $F_b/d_{câble}$ en N/mm,
   **caractérisé en ce que**
   ladite matrice présente une dureté shore D entre 45 et 75 et chacun desdits filaments d'acier effectue un contact partiel et intermittent avec ladite matrice lors de la progression le long dudit filament, de sorte que lesdits câbles d'acier soient mécaniquement ancrés dans ladite matrice avec une force d'extraction longitudinale par unité de longueur de $f_a$ en N/mm, de sorte que la charge à la rupture transversale par unité de diamètre $F_b/d_{câble}$ soit plus petite que 300 fois $f_a$ ou comme mentionné dans la formule suivante :

$$(F_b/d_{câble}) < 300.f_a$$

**7.** Tuyau selon la revendication 6, dans lequel ladite charge à la rupture transversale par unité de diamètre $F_b/d_{câble}$ est plus petite que 150 fois $f_a$ ou comme mentionné dans la formule suivante :

$$(F_b/d_{câble}) < 150.f_a$$

**8.** Procédé de réduction de la longueur couverte d'un raccord de tuyau à tuyau ou d'un raccord d'un tuyau à une extrémité dans un raccord à manchon d'un tuyau comprenant un tube central thermoplastique et au moins une couche de matériau de renfort sous la forme d'une bande, ladite bande comprenant une matrice polymère et une pluralité de câbles d'acier, lesdits câbles d'acier étant aménagés parallèlement dans ladite bande, comprenant les étapes consistant à :

- mettre en oeuvre un manchon de raccordement,
- enfiler ledit manchon sur l'extrémité du premier tube à raccorder,
- ensuite rétracter ledit manchon par-dessus ledit second tube ou ledit raccord, et
- souder ledit manchon audit premier et audit second tube ou bien encore audit premier tube et audit raccord d'extrémité,

**caractérisé en ce que** :

lesdits câbles d'acier sont mécaniquement ancrés dans ladite matrice polymère et la longueur couverte par extrémité de tuyau est supérieure à 30 fois et inférieure à 300 fois le diamètre dudit câble d'acier.

106

122

120

100

104

102

Fig. 1a

132

130

134

Fig. 1b

Fig. 2

Fig. 3a

Fig. 3b

Fig. 3c

Fig. 3d

**EP 1 740 869 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02090812 A
- US 20020182961 A1